# FASCICULE DE BREVET EUROPEEN

(11) **EP 2 794 356 B1**
(45) Date de publication et mention de la délivrance du brevet: **24.05.2017**
(21) Numéro de dépôt: 12816734.3
(22) Date de dépôt: 19.12.2012
(51) Int. Cl.: F02N 11/08, B60R 16/03

(54) **DISPOSITIF DE MAINTIEN DE TENSION AU DEMARRAGE POUR VEHICULE AUTOMOBILE**
VORRICHTUNG ZUR BEWAHRUNG DER SPANNUNG WÄHREND DER ANSCHALTPHASE FÜR EIN KRAFTFAHRZEUG
DEVICE FOR MAINTAINING VOLTAGE DURING STARTUP FOR A MOTOR VEHICLE

(30) Priorité: 22.12.2011 FR 1162262
(43) Date de publication de la demande: 29.10.2014
(73) Titulaire: Valeo Equipements Electriques Moteur, 94046 Créteil Cedex (FR)
(72) Inventeur: CHEMIN, Michaël, F-94510 La Queue En Brie (FR); SARDAT, Pierre, F-93340 Le Raincy (FR)
(74) Mandataire: Tran, Chi-Hai
(86) Numéro de dépôt international: PCT/FR2012/052998
(87) Numéro de publication internationale: WO 2013/093343

(56) Documents cités:
- JP-A- 2002 195 139
- JP-A- 2003 244 805
- JP-A- 2005 207 243
- JP-A- 2008 195 294

## Description

La présente invention concerne de manière générale un dispositif de maintien de tension pour véhicule automobile. Plus particulièrement, l'invention concerne un dispositif de maintien de tension utilisable pendant les phases de démarrage du moteur thermique d'un véhicule automobile.

L'introduction dans les véhicules automobiles des systèmes d'arrêt/relance automatique du moteur thermique, dits «Stop & Go» en terminologie anglaise, a rendu plus critiques les contraintes de tension sur les réseaux électriques de bord des véhicules.

De manière générale, la puissance de la machine électrique tournante assurant le démarrage du moteur thermique a été accrue afin de faciliter le démarrage de celui-ci et d'éviter un certain nombre de désagréments que pourraient causer pour les utilisateurs les opérations multiples de relance moteur. Il en découle un courant de pic plus élevé tiré sur la batterie lors du démarrage du moteur et corrélativement des chutes de tension importantes sur le réseau de bord. Ce problème de chutes de tension importantes se pose dans les deux architectures connues du système « Stop & Go », à savoir, l'architecture à alterno-démarreur et l'architecture à re-démarreur, dit également « démarreur renforcé » ou « re-starter » en terminologie anglaise.

L'intégration d'un dispositif de maintien de tension dans un système d'arrêt/relance automatique du moteur thermique est une réponse possible au problème indiqué ci-dessus. Dans le système à alterno-démarreur, l'intégration d'un dispositif de maintien de tension présente aussi l'avantage d'autoriser un accroissement du couple de la machine, accroissement de couple qui découle de la possibilité d'alimenter le circuit d'excitation du rotor avec une tension bien supérieure à celle nominale, de 14 V, du réseau de bord classique.

Dans la technique antérieure, il est connu de l'entité inventive un système à alterno-démarreur équipé d'un dispositif de maintien de tension capable de faire monter la tension du réseau de bord jusqu'à une valeur de l'ordre de 17,5 V.

On notera cependant que la plupart des équipements et accessoires électroniques raccordés au réseau de bord du véhicule ne sont par prévus pour supporter de façon répétée une tension de réseau de bord de l'ordre de 17,5 V. En effet, ces équipements et accessoires électroniques ont généralement été conçus pour un réseau de bord standard de 12 V.

Le document JP2005207243 A décrit un dispositif de maintien de tension destiné à être associé à une machine électrique tournante remplissant une fonction de démarrage du moteur thermique d'un véhicule automobile, ce dispositif étant agencé pour fournir au démarrage du moteur thermique une tension supplémentaire pour une alimentation électrique de la machine électrique tournante, cette tension supplémentaire s'ajoutant à une tension nominale du réseau électrique de bord du véhicule fournie par une batterie comprise dans le véhicule en tant que source principale de tension.

Il est donc souhaitable de proposer des solutions autorisant une meilleure maîtrise de la tension du réseau de bord dans un véhicule équipé d'un dispositif de maintien de tension, en réduisant au minimum la durée pendant laquelle le dispositif impose une tension élevée au réseau de bord.

Selon un premier aspect, la présente invention concerne un dispositif de maintien de tension destiné à être associé à une machine électrique tournante remplissant une fonction de démarrage du moteur thermique d'un véhicule automobile, ce dispositif étant agencé pour fournir au démarrage du moteur thermique une tension supplémentaire pour une alimentation électrique de la machine électrique tournante, cette tension supplémentaire s'ajoutant à une tension nominale du réseau électrique de bord du véhicule fournie par une batterie comprise dans le véhicule en tant que source principale de tension, le dispositif comprenant une seconde source de tension et des premier et second interrupteurs électroniques comportant chacun au moins un transistor de type MOSFET.

Conformément à l'invention, au moins un transistor MOSFET du second interrupteur, monté en série avec la seconde source de tension, est commandé en régime linéaire en fin de démarrage du moteur thermique.

Selon une autre caractéristique particulière, le transistor MOSFET fonctionnant en régime linéaire en fin de démarrage du moteur thermique fonctionne en régime de commutation tout-ou-rien pendant le reste de l'opération de démarrage.

Selon encore une autre caractéristique particulière, le dispositif comprend une boucle d'asservissement de courant pour la commande en régime linéaire du transistor du second interrupteur électronique.

Selon encore une autre caractéristique particulière, le courant électrique circulant dans le transistor en régime linéaire est commandé par une consigne fournie en entrée à la boucle d'asservissement de courant.

Selon une forme de réalisation particulière de l'invention, le second interrupteur électronique comporte une pluralité de transistors MOSFET montés en parallèle, cette pluralité de transistors MOSFET étant montée en série avec la seconde source de tension. L'ensemble des transistors peuvent être commandés en régime linéaire en fin de démarrage du moteur thermique, et le dispositif comprend pour chaque transistor une boucle d'asservissement de courant pour la commande en régime linéaire de celui-ci.

En effet, dans certaines applications de l'invention, il est nécessaire de monter en parallèle plusieurs transistors MOSFET de manière à pouvoir passer des courants de pic importants. Dans l'état de la technique, cette mise en parallèle des transistors MOSFET pose des problèmes lors des phases de fonctionnement de ces transistors en régime linéaire car, d'une part, ce mode de fonctionnement est instable thermiquement et, d'autre part, la dispersion de fabrication sur la tension Vsgth («source-to-gate threshold voltage») des transistors MOSFET entraîne une différence importante du courant conduit par chacun des transistors. Dans la présente invention, l'incorporation de boucles d'asservissement de courant pour la commande des transistors MOSFET montés en parallèle garantit un fonctionnement satisfaisant, et cela malgré les disparités existant dans les transistors sur les tensions Vsgth et les transconductances, ainsi que sur les températures et les couplages thermiques entre transistors, et cela sans nécessité de tri en production des transistors. De plus, l'absence de contrainte sur le couplage thermique des transistors donne la possibilité d'utiliser différents substrats de puissance pour les transistors et notamment un substrat de type métallique isolé (SMI).

Selon une autre caractéristique particulière de l'invention, le premier interrupteur comporte au moins un transistor MOSFET commandé en régime de commutation dit tout-ou-rien.

Selon une autre forme de réalisation particulière de l'invention, la seconde source de tension comporte un supercondensateur. Dans ce cas, le dispositif pourra comprendre un convertisseur continu-continu connecté à la seconde source de tension pour charger le supercondensateur.

Selon un autre aspect, l'invention concerne également un système de démarrage de moteur thermique comprenant un dispositif de maintien de tension tel que décrit brièvement ci-dessus.

L'invention est maintenant décrite au travers de différents exemples de réalisation, en référence aux dessins ci-annexés. Il est à noter que ces dessins n'ont d'autre but que d'illustrer le texte de la description et ne constituent en aucune sorte une limitation de la portée de l'invention :
- la Fig.1 montre un système de démarrage de moteur thermique à alterno-démarreur équipé d'un dispositif de maintien de tension ;
- la Fig.2 montre un interrupteur électronique commandable en régime linéaire qui est inclus dans une forme de réalisation particulière du dispositif de l'invention, cet interrupteur électronique comprenant plusieurs transistors MOSFET montés en parallèle et équipés de boucles d'asservissement de courant ; et
- la Fig.3 montre un transistor MOSFET équipé d'une boucle d'asservissement de courant et inclus dans l'interrupteur électronique de la Fig.2.

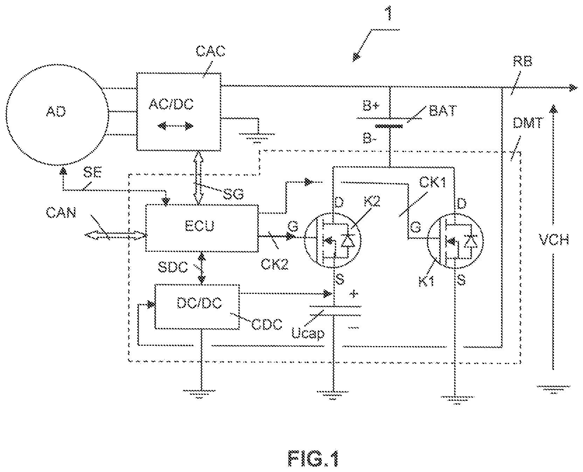

Un système de démarrage de moteur thermique à alterno-démarreur 1 équipé d'un dispositif de maintien de tension DMT est montré à la Fig.1.

Le système de démarrage de moteur thermique 1 comporte essentiellement un alterno-démarreur AD, un convertisseur alternatif-continu (AC/DC) réversible CAC, une unité électronique de commande ECU et un dispositif de maintien de tension DMT.

Une batterie BAT est connectée au réseau électrique de bord RB du véhicule. Une borne positive B+ de la batterie BAT est reliée aux câbles de polarité positive du réseau RB. Une borne négative B- de la batterie BAT est reliée, à travers le dispositif de maintien de tension DMT, à la masse (châssis du véhicule) du réseau électrique de bord RB.

L'alterno-démarreur AD est une machine électrique réversible qui est apte à être utilisée, d'une part, comme générateur électrique lorsqu'elle est entraînée par le moteur thermique et, d'autre part, comme moteur électrique pour le démarrage du moteur thermique auquel elle est associée.

Le convertisseur CAC est un convertisseur réversible capable de fonctionner en pont redresseur lorsque l'alterno-démarreur AD est en mode générateur électrique et en mode onduleur lorsque l'alterno-démarreur AD est en mode moteur électrique ou démarreur. Le convertisseur CAC est habituellement construit autour d'un pont de transistors de puissance , par exemple de type MOSFET, et est relié, d'une part, aux bobinages statoriques du stator de l'alterno-démarreur et, d'autre part, au réseau électrique de bord RB du véhicule. Lorsque l'alterno-démarreur AD est en mode moteur électrique, les transistors du convertisseur CAC sont pilotés séquentiellement et alimentent de manière synchrone les bobinages de phases du stator.

L'unité électronique de commande ECU est de manière classique construite autour d'un microcontrôleur. L'unité ECU est reliée à une unité de contrôle de véhicule (non représentée) à travers un bus de communication, par exemple de type CAN. A travers ce bus de communication, l'unité ECU reçoit des ordres et instructions en provenance de l'unité de contrôle de véhicule, ordres et instructions que l'unité ECU décline en signaux de commande pour l'alterno-démarreur AD, le convertisseur CAC et le dispositif de maintien de tension DMT. De plus, des informations d'état, telles que des alarmes, provenant de l'alterno-démarreur AD, du convertisseur CAC et du dispositif de maintien de tension DMT peuvent être remontées vers l'unité ECU à travers des liaisons de communication prévues avec ces éléments fonctionnels.

L'unité ECU fournit ainsi un signal de commande d'excitation SE à l'alterno-démarreur AD et des signaux de commande de commutation SG au convertisseur CAC. Le signal SE détermine le courant d'excitation alimentant une bobine d'excitation du rotor de la machine AD. Les signaux SG commandent les commutations des transistors de puissance du convertisseur CAC et déterminent le mode de fonctionnement de celui-ci. De plus, l'unité ECU fournit des signaux de commande CK1, CK2 et SDC au dispositif de maintien de tension DMT.

Comme montré à la Fig.1, le dispositif de maintien de tension DMT comporte essentiellement deux interrupteurs électroniques commandés K1 et K2, une unité de supercondensateur Ucap et un convertisseur continu-continu (DC/DC) de charge.

Le principe général du dispositif de maintien de tension DMT consiste à mettre en série avec la batterie BAT une seconde source de tension pendant l'opération de démarrage du moteur thermique. Cette source secondaire de tension est ici l'unité de supercondensateur Ucap. Le convertisseur CAC est ainsi alimenté, lors du démarrage du moteur thermique, par une tension supérieure à celle de 14 V généralement présente sur le réseau de bord RB du véhicule. Cette tension supérieure permet d'augmenter le couple de la machine AD au démarrage et garantit le maintien d'un niveau de tension suffisant pour l'ensemble des équipements et accessoires raccordés au réseau de bord RB.

Les interrupteurs commandés K1 et K2 sont ici des transistors MOSFET de type N.

Le transistor K1 comporte une électrode de drain D reliée à l'électrode de drain D du transistor K2 et à la borne négative B- de la batterie BAT. Une électrode de source S du transistor K1 est reliée à la masse du circuit. La borne B- de la batterie BAT est ainsi reliée à la masse lorsque le transistor K1 est commandé en saturation (interrupteur fermé). Le transistor K1 est commandé par l'unité ECU à travers le signal de commande CK1.

Le transistor K2 comporte une électrode de source S qui est reliée à une borne positive + de l'unité de supercondensateur Ucap dont une borne négative - est reliée à la masse du circuit. Lorsque le transistor K2 est commandé en saturation (interrupteur fermé), l'unité de supercondensateur Ucap, en tant que seconde source de tension, est mise en série avec la batterie BAT qui constitue la source de tension principale. Le transistor K2 est commandé par l'unité ECU à travers le signal de commande CK2.

L'unité de supercondensateur Ucap est formée ici de deux cellules montées en série, chaque cellule ayant une capacité de l'ordre de 1200 F. La charge de l'unité de supercondensateur Ucap est assurée par le convertisseur CDC qui est alimenté par la batterie BAT. Le niveau de charge de l'unité de supercondensateur Ucap est contrôlé et géré par l'unité ECU à travers le signal SDC fourni par cette dernière au convertisseur CDC. Typiquement, l'unité de supercondensateur Ucap est chargée à une tension nominale de l'ordre de 5 V.

On notera que conformément à l'invention le transistor K1 fonctionne seulement en régime de commutation dit tout-ou-rien (c'est-à-dire, soit en état fermé, soit en état ouvert), alors que le transistor K2 fonctionne en régime de commutation et en régime linéaire. Les transistors K1 et K2 ne sont jamais activés en conduction simultanément. A un même instant, les transistors K1 et K2 sont dans des états de fonctionnement opposés. Lorsque le transistor K1 est saturé (fermé), le transistor K2 est bloqué (ouvert). Lorsque le transistor K1 est bloqué (ouvert), le transistor K2 est soit saturé (fermé) soit en régime linéaire avec une résistance Rds (résistance drain-source) contrôlée.

Dans l'état de repos du dispositif DMT, c'est-à-dire, en dehors des phases de démarrage du moteur thermique, le transistor K1 est saturé et le transistor K2 est bloqué. La tension du réseau de bord RB est alors la tension nominale de 14 V, fixée par la batterie BAT qui est du type batterie au plomb. L'unité de supercondensateur Ucap est maintenue chargée par le convertisseur CDC.

Lorsqu'un ordre de démarrage est reçu par l'unité ECU, le dispositif DMT est activé en commandant, par le biais des signaux CK1 et CK2, le blocage du transistor K1 et la saturation du transistor K2. La batterie BAT et l'unité de supercondensateur Ucap sont alors connectées en série et alimentent le convertisseur CAC avec une tension réseau haute VCH, de l'ordre de 17,5 V à vide. Cette tension VCH chute pendant l'opération de démarrage, du fait des différentes résistances du circuit, à savoir, les résistances internes de la batterie BAT et de l'unité de supercondensateur Ucap, ainsi que celles du transistor K2 et des câbles de connexion.

A la fin de l'opération de démarrage, la tension VCH a tendance à remonter vers la tension à vide 17,5 V du fait d'une diminution du courant prélevé. Conformément à l'invention, le transistor K2 est alors commandé en régime linéaire à travers le signal de commande CK2, de manière à introduire dans le circuit électrique une résistance Rds significative et à faire chuter la tension VCH entre la borne B+ et la masse. Un module logiciel de commande (non représenté) est prévu à cet effet dans l'unité ECU. Les équipements et accessoires électroniques raccordés au réseau de bord du véhicule ne sont ainsi soumis à la tension VCH élevée (17,5 V) que pendant le temps minimum nécessaire au démarrage du moteur thermique.

Dans cette forme de réalisation, le transistor K2 est commandé en régime linéaire de telle manière à limiter la tension VCH à une valeur maximum de 15 V à la fin de l'opération de démarrage du moteur thermique.

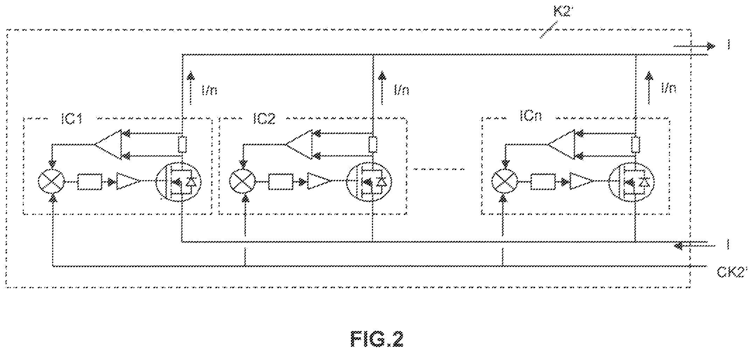

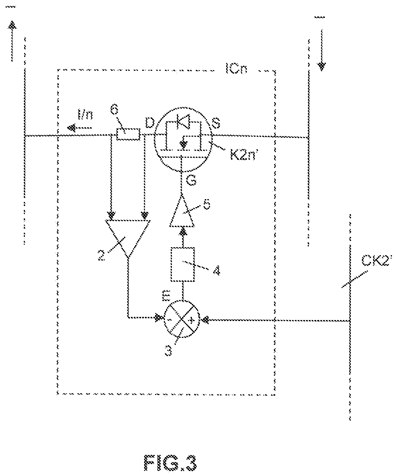

En référence également aux Figs.2 et 3, il est décrit ci-dessous une forme de réalisation du dispositif de maintien de tension selon l'invention dans laquelle les interrupteurs électroniques K1 et K2 sont remplacés par des interrupteurs K1' (non représenté) et K2' comportant chacun une pluralité de transistors MOSFET montés en parallèle. Seul l'interrupteur K2' est décrit ici en détail, sachant que la structure et le fonctionnement d'un interrupteur K1' formé avec plusieurs transistors MOSFET en parallèle fonctionnant en régime de commutation tout-ou-rien sont connus de l'homme du métier.

La Fig.2 montre une architecture générale de l'interrupteur K2' selon la présente invention. L'interrupteur K2' comporte un montage parallèle de n interrupteurs IC1 à ICn ayant chacun un transistor MOSFET, ici de type canal N, et une boucle d'asservissement de courant. Chaque interrupteur ICn passe alors un courant I/n et reçoit une consigne CK2' correspondante, sachant que le courant total que doit passer l'interrupteur K2' est égal à I.

Comme montré à la Fig.3, dans cette forme de réalisation, la boucle d'asservissement de courant pour le transistor K2n' inclus dans l'interrupteur K2' comporte essentiellement un amplificateur différentiel 2, un amplificateur soustracteur 3, un correcteur 4, un amplificateur d'attaque 5 et un shunt de mesure de courant 6.

De même que pour le transistor K2 dans la forme de réalisation de la Fig.1, le transistor K2n' peut fonctionner selon deux régimes pendant l'opération de démarrage du moteur thermique, à savoir, d'abord en régime de commutation tout-ou-rien et puis, en fin de démarrage, en régime linéaire de manière à limiter la tension VCH. Ces deux modes de fonctionnement du transistor K2n' sont commandés au moyen de la valeur affectée à la consigne CK2'.

L'amplificateur différentiel 2 prélève aux bornes du shunt 6 une information de tension représentative du courant I/n réel traversant le transistor K2n'.

L'information du courant I/n réel est une information de contre-réaction qui est appliquée à une entrée - du soustracteur 2. Une entrée + du soustracteur 3 reçoit la consigne CK2' sous la forme d'un signal de commande fourni par l'unité ECU (cf. Fig.1). Le transistor K2n' est commandé par un signal d'erreur E entre la consigne CK2' et le courant I/n réel. Le signal d'erreur E est appliqué à la grille G du transistor K2n' à travers le correcteur 4 et l'amplificateur d'attaque 5. Typiquement, le correcteur 4 est de type proportionnel-intégral (PI).

Les boucles d'asservissement de courant associées aux transistors de l'interrupteur K2' autorisent un contrôle précis du point de fonctionnement de ceux-ci. Il est ainsi possible de commander les transistors selon les deux régimes de fonctionnement préconisés par l'invention et cela en garantissant une très bonne stabilité en régime linéaire.

On notera que la boucle d'asservissement de courant décrite ci-dessus en référence à la Fig.3 peut bien entendu être intégrée dans la forme de réalisation de la Fig.1 pour commander le transistor MOSFET K2.

Différentes autres formes de réalisation de l'invention que celles décrites ci-dessus sont à la portée de l'homme du métier instruit par les enseignements qui lui sont apportés par la présente description.

## Revendications

1. Dispositif de maintien de tension (DMT) destiné à être associé à une machine électrique tournante (AD) remplissant une fonction de démarrage du moteur thermique d'un véhicule automobile, ce dispositif (DMT) étant agencé pour fournir au démarrage du moteur thermique une tension supplémentaire pour une alimentation électrique de la machine électrique tournante (AD), cette tension supplémentaire s'ajoutant à une tension nominale du réseau électrique de bord (RB) du véhicule fournie par une batterie (BAT) comprise dans le véhicule en tant que source principale de tension, le dispositif comprenant une seconde source de tension (Ucap) et des premier et second interrupteurs électroniques (K1, K2) comportant chacun au moins un transistor de type MOSFET, **caractérisé en ce que** au moins un transistor MOSFET (K2, K2n') des interrupteurs, monté en série avec la seconde source de tension (Ucap), est commandé en régime linéaire en fin de démarrage du moteur thermique.

2. Dispositif selon la revendication précédente, **caractérisé en ce que** le transistor MOSFET fonctionnant en régime linéaire en fin de démarrage du moteur thermique fonctionne en régime de commutation tout-ou-rien pendant le reste de l'opération de démarrage.

3. Dispositif selon l'une quelconque des revendications précédentes, **caractérisé en ce qu'**il comprend une boucle d'asservissement de courant (2, 3, 4, 5, 6) pour la commande en régime linéaire du transistor (K2, K2n') du second interrupteur électronique.

4. Dispositif selon la revendication précédente, **caractérisé en ce que** le courant électrique (I, I/n) circulant dans le transistor (K2, K2n') en régime linéaire est commandé par une consigne (CK2') fournie en entrée à la boucle d'asservissement de courant (2, 3, 4, 5, 6).

5. Dispositif selon l'une quelconque des revendications précédentes, **caractérisé en ce que** le second interrupteur électronique comporte une pluralité (n) de transistors MOSFET (IC1, IC2, ... ICn) montés en parallèle, la pluralité de transistors MOSFET étant montée en série avec la seconde source de tension (Ucap).

6. Dispositif selon la revendication précédente, **caractérisé en ce que** chacun des transistors (IC1, IC2, ... ICn) est commandé en régime linéaire en fin de démarrage du moteur thermique, et **en ce que** le dispositif comprend pour chaque transistor une boucle d'asservissement de courant (2, 3, 4, 5, 6) pour la commande en régime linéaire de celui-ci.

7. Dispositif selon l'une quelconque des revendications précédentes, **caractérisé en ce que** le premier interrupteur (K1) comporte au moins un transistor MOSFET commandé en régime de commutation dit tout-ou-rien.

8. Dispositif selon l'une quelconque des revendications précédentes, **caractérisé en ce que** la seconde source de tension comporte un supercondensateur (Ucap).

9. Dispositif selon la revendication précédente, **caractérisé en ce qu'**il comprend un convertisseur continu-continu (CDC) connecté à la seconde source de tension pour charger le supercondensateur (Ucap).

10. Système de démarrage de moteur thermique, **caractérisé en ce qu'**il comprend un dispositif de maintien de tension (DMT) selon l'une quelconque des revendications précédentes.

## Patentansprüche

1. Spannungshaltevorrichtung (DMT), die dazu bestimmt ist, einer drehenden elektrischen Maschine (AD) zugeordnet zu werden, die eine Anlasserfunktion einer Brennkraftmaschine eines Kraftfahrzeugs erfüllt, wobei diese Vorrichtung (DMT) dafür ausgelegt ist, beim Anlassen der Brennkraftmaschine eine zusätzliche Spannung für eine elektrische Versorgung der drehenden elektrischen Maschine (AD) zu liefern, wobei diese zusätzliche Spannung zu einer Nennspannung des elektrischen Bordnetzes (RB) des Fahrzeugs, die von einer Batterie (BAT) geliefert wird, die in dem Fahrzeug als Hauptspannungsquelle enthalten ist, hinzukommt, wobei die Vorrichtung eine zweite Spannungsquelle (Ucap) und einen ersten und einen zweiten elektronischen Unterbrecher (K1, K2) umfasst, die jeweils wenigstens einen MOSFET-Transistor enthalten, **dadurch gekennzeichnet, dass** wenigstens ein MOSFET-Transistor (K2, K2n') der Unterbrecher, der in Reihe mit der zweiten Spannungsquelle (Ucap) geschaltet ist, am Ende des Anlassens der Brennkraftmaschine in einer linearen Betriebsweise gesteuert wird.

2. Vorrichtung nach dem vorhergehenden Anspruch, **dadurch gekennzeichnet, dass** der MOSFET-Transistor, der am Ende des Anlassens der Brennkraftmaschine in einer linearen Betriebsweise arbeitet, während des verbleibenden Anlassbetriebs in einer Ein/Aus-Schaltbetriebsart arbeitet.

3. Vorrichtung nach einem der vorhergehenden Ansprüche, **dadurch gekennzeichnet, dass** sie eine Stromregelungsschleife (2, 3, 4, 5, 6) umfasst, um die lineare Betriebsweise des Transistors (K2, K2n') des zweiten elektronischen Unterbrechers zu steuern.

4. Vorrichtung nach dem vorhergehenden Anspruch, **dadurch gekennzeichnet, dass** der elektrische Strom (I, I/n), der in dem Transistor (K2, K2n') in der linearen Betriebsweise fließt, durch einen Sollwert (CK2'), der an den Eingang der Stromregelungsschleife (2, 3, 4, 5, 6) geliefert wird, gesteuert wird.

5. Vorrichtung nach einem der vorhergehenden Ansprüche, **dadurch gekennzeichnet, dass** der zweite elektronische Unterbrecher mehrere (n) MOSFET-Transistoren (IC1, IC2, ..., ICn) umfasst, die parallel geschaltet sind, wobei die mehreren MOSFET-Transistoren mit der zweiten Spannungsquelle (Ucap) in Reihe geschaltet sind.

6. Vorrichtung nach dem vorhergehenden Anspruch, **dadurch gekennzeichnet, dass** jeder der Transistoren (IC1, IC2, ..., ICn) am Ende des Anlassens der Brennkraftmaschine in einer linearen Betriebsweise gesteuert wird und dass die Vorrichtung für jeden Transistor eine Stromregelungsschleife (2, 3, 4, 5, 6) für seine Steuerung in der linearen Betriebsweise umfasst.

7. Vorrichtung nach einem der vorhergehenden Ansprüche, **dadurch gekennzeichnet, dass** der erste Unterbrecher (K1) wenigstens einen MOSFET-Transistor umfasst, der in der Ein/Aus-Schaltbetriebsart gesteuert wird.

8. Vorrichtung nach einem der vorhergehenden Ansprüche, **dadurch gekennzeichnet, dass** die zweite Spannungsquelle einen Superkondensator (Ucap) enthält.

9. Vorrichtung nach dem vorhergehenden Anspruch, **dadurch gekennzeichnet, dass** sie einen Gleichstrom/Gleichstrom-Umsetzer (CDC) umfasst, der mit der zweiten Spannungsquelle verbunden ist, um den Superkondensator (Ucap) zu laden.

10. System zum Anlassen einer Brennkraftmaschine, **dadurch gekennzeichnet, dass** es eine Spannungshaltevorrichtung (DMT) nach einem der vorhergehenden Ansprüche umfasst.

## Claims

1. Device for maintaining voltage (DMT) intended to be associated with a rotating electrical machine (AD) fulfilling a motor vehicle heat engine startup function, this device (DMT) being arranged to supply, on startup of the heat engine, an additional voltage for an electrical power supply of the rotating electrical machine (AD), this additional voltage being added to a nominal voltage of the onboard electrical network (RB) of the vehicle supplied by a battery (BAT) included in the vehicle as main voltage source, the device comprising a second voltage source (Ucap) and first and second electronic switches (K1, K2) each comprising at least one transistor of MOSFET type, **characterized in that** at least one MOSFET transistor (K2, K2n') of the switches, mounted in series with the second voltage source (Ucap) is controlled in linear mode at the end of startup of the heat engine.

2. Device according to the preceding claim, **characterized in that** the MOSFET transistor operating in linear mode at the end of startup of the heat engine operates in on-or-off switching mode during the rest of the startup operation.

3. Device according to any one of the preceding claims, **characterized in that** it comprises a current control loop (2, 3, 4, 5, 6) for the control in linear mode of the transistor (K2, K2n') of the second electronic switch.

4. Device according to the preceding claim, **characterized in that** the electric current (I, I/n) circulating in the transistor (K2, K2n') in linear mode is controlled by a setpoint (CK2') supplied as input to the current control loop (2, 3, 4, 5, 6).

5. Device according to any one of the preceding claims, **characterized in that** the second electronic switch comprises a plurality (n) of MOSFET transistors (IC1, IC2, ... ICn) mounted in parallel, the plurality of MOSFET transistors being mounted in series with the second voltage source (Ucap).

6. Device according to the preceding claim, **characterized in that** each of the transistors (IC1, IC2, ... ICn) is controlled in linear mode at the end of startup of the heat engine, and **in that** the device comprises, for each transistor, a current control loop (2, 3, 4, 5, 6) for the control in linear mode thereof.

7. Device according to any one of the preceding claims, **characterized in that** the first switch (K1) comprises at least one MOSFET transistor controlled in so-called on-or-off switching mode.

8. Device according to any one of the preceding claims, **characterized in that** the second voltage source comprises a supercapacitor (Ucap).

9. Device according to the preceding claim, **characterized in that** it comprises a DC-DC converter (CDC) connected to the second voltage source to charge the supercapacitor (Ucap).

10. Heat engine startup system, **characterized in that** it comprises a device for maintaining voltage (DMT) according to any one of the preceding claims.
